# EUROPÄISCHE PATENTSCHRIFT

(11) **EP 1 999 045 B1**
(45) Veröffentlichungstag und Bekanntmachung des Hinweises auf die Patenterteilung: **19.05.2010**
(21) Anmeldenummer: 06723713.1
(22) Anmeldetag: 24.03.2006
(51) Int. Cl.: B65G 19/20, B65G 19/24, B65G 23/06, F16H 55/30

(54) **GLIEDERKETTE FÜR KETTENFÖRDERER UND KETTENRAD HIERFÜR**
LINK CHAIN FOR CHAIN CONVEYORS AND CHAIN WHEEL THEREFOR
CHAINE A CHAINONS POUR TRANSPORTEUR A CHAINE ET PIGNONS DE CHAINE POUR CE TRANSPORTEUR

(43) Veröffentlichungstag der Anmeldung: 10.12.2008
(73) Patentinhaber: Bucyrus Europe GmbH, 44534 Lünen (DE)
(72) Erfinder: MERTEN, Gerhard, 44534 Lünen (DE); MEYA, Hans, 59368 Werne (DE)
(74) Vertreter: Althaus, Arndt
(86) Internationale Anmeldenummer: PCT/EP2006/002734
(87) Internationale Veröffentlichungsnummer: WO 2007/110088

(56) Entgegenhaltungen:
- WO-A-88/03906
- DE-A1- 4 316 753
- DE-A1- 19 701 579
- DE-B1- 1 525 047
- DE-C1- 19 618 395
- DE-C1- 19 724 586

## Beschreibung

Die Erfindung betrifft eine Gliederkette für Kettenförderer, insbesondere Kettenkratzerförderer für den Bergbaueinsatz, mit gelenkig ineinandergehängten vertikalen Kettengliedern und horizontalen Kettengliedern, wobei die vertikalen Kettenglieder rundumlaufend ein konstantes, an der Außenseite mit einer Abflachung und an der Innenseite mit einem Kreisbogen versehenes Querschnittsprofil aufweisen und die horizontalen Kettenglieder Bugteile aufweisen, deren Außenbreite größer ist als die Außenbreite der vertikalen Kettenglieder und die eine gerade Stirnzone aufweisen, wobei die die Bugteile verbindenden Längsschenkel der horizontalen Kettenglieder an ihren Außenflächen mit einer Einziehung versehen sind.

Eine gattungsgemäße Gliederkette ist aus der DE 197 01 579 A1 bekannt, auf die zur Vervollständigung der vorliegenden Offenbarung verwiesen wird und in der weiterer Stand der Technik zu Gliederketten angegeben ist. Bei der gattungsgemäßen Gliederkette wird aufgrund der großen Breite der Bugteile der horizontalen Kettenglieder, des geradlinigen Verlaufs der Stirnseite der Bugteile sowie der Ausgestaltung der eine wesentlich geringere Außenbreite aufweisenden vertikalen Kettenglieder mit dem etwa halbkreisförmigen Querschnitt das umlaufverhalten der Gliederkette am angetriebenen Kettenrad erheblich verbessert. Gegenüber ansonsten üblichen horizontalen Kettengliedern mit bogenförmigen Bugteilen bzw. Bugflächen werden die Flächenpressungen zwischen den senkrecht zur Laufrichtung der Gliederkette mit einer geradlinigen Stirnfläche versehenen Bugflächen und den Taschen des Kettenrades erheblich reduziert. Da jeweils die Bugteile der horizontalen Kettenglieder relativ weit nach vorne und seitlich in die jeweiligen Taschen der Kettenglieder hineinragen, entstehen selbst nach größeren Verschleißerscheinungen an den Taschen des Kettenrades nur geringfügig gegenüber dem Ausgangszustand erhöhte Flächenpressungen, da die insgesamt wirksame Auflagefläche zwischen den Bugteilen der horizontalen Kettenglieder und den Taschen des Kettenrades im Vergleich zu anderen Kettengeometrien höher ist. Die halbkreisförmig profilierten vertikalen Kettenglieder bauen gleichzeitig niedrig und erfüllen die geforderten großen Querschnittsstärken, um auch den hohen, im Betriebseinsatz der Gliederkette auftretenden Kettenkräften standhalten zu können. Für den Kratzeranschluß von insbesondere bügelartigen Kratzern kommen spezielle, als Stegkettenglieder ausgebildete Horizontalkettenglieder zum Einsatz, die in ihrem Steg eine Bohrung aufweisen, die von einem Kupplungszapfen an den Kratzern durchgriffen werden, um die zug- bzw. schubfeste Verbindung zwischen Kratzer einerseits und horizontalem Stegkettenglied andererseits herzustellen. Der zusätzliche Steg der Stegkettenglieder erhöht nicht nur den Fertigungspreis sondern auch das Gesamtgewicht der Gliederkette, so daß insgesamt eine höhere Antriebsleistung zum Antreiben der Gliederkette erforderlich ist. Darüber hinaus müssen unterschiedliche horizontale Kettenglieder hergestellt und in einer bestimmten Reihenfolge miteinander verbunden werden, um eine Gliederkette für Kettenkratzerförderer zu bilden.

Aufgabe der Erfindung ist es, eine hochfeste Gliederkette zur Verwendung insbesondere bei Kettenkratzerförderern zu schaffen, die selbst bei großen Längen von mehreren hundert Metern gut einsetzbar ist, ohne in ihrer Bauhöhe und in ihrem Gewicht überproportional stark dimensioniert worden zu sein und die sich außerdem durch gutes Last- und Laufverhalten der horizontalen und vertikalen Kettenglieder untereinander sowie beim Durchlaufen des Kettenrades auszeichnet und die zugleich eine gute Montage von Kratzern und Mitnahme der montierten Kratzer ermöglicht.

Diese Aufgabe wird hinsichtlich der gattungsgemäßen Gliederkette mit der in Anspruch 1 angegebenen Erfindung gelöst.

Bei der erfindungsgemäßen Gliederkette bzw. Kratzerkette weisen die horizontalen Kettenglieder beidseitig in den Einziehungen Mitnahmemittel zur formschlüssigen Mitnahme von an den horizontalen Kettengliedern anschließbaren Kratzern auf. Durch die in den Einziehungen erfindungsgemäß ausgebildeten Mitnahmemittel wird ein äußerst gutes Mitnahmeverhalten für die an diesen horizontalen Kettenglieder angeschlossenen Kratzer erreicht, ohne daß es erforderlich ist, spezielle Kettenglieder, insbesondere Stegkettenglieder, herzustellen und in die Gliederkette an einer bestimmten Position einzuschließen. Die bei den horizontalen Kettengliedern vorhandene gerade Stirnseite an den Bugteilen ermöglicht im Vergleich zu anderen Kettengliedgeometrien erheblich geringere Flächenpressungen zwischen den Bugflächen der horizontalen Kettenglieder und einem Kettenrad, selbst wenn aufgrund von Verschleißerscheinungen an den Taschen des Kettenrades die für die Auflage zur Verfügung stehende Auflagefläche gegenüber dem Ausgangszustand verringert ist. Das Querschnittsprofil der vertikalen Kettenglieder ist vorzugsweise jeweils am Übergang der Abflachung in den Kreisbogen mit einer Abschrägung versehen. Die vertikalen Kettenglieder mit der über ihren Umfang umlaufend ausgebildeten abgeflachten Profilierung, der kreisbogenförmigen Wölbung an der der Innenöffnung zugewandten Innenfläche sowie den Abschrägungen am Übergang der Abflachung zum Kreisbogen bewirken dann trotz der weiterhin möglichen geringen Bauhöhe der Gliederkette ein deutlich besseres Laufverhalten der Gliederkette insgesamt, da durch die Abschrägungen am Übergang zur Außenseite der vertikalen Kettenglieder deren Abwinkelbarkeit zu den horizontalen Kettenglieder im eingehängten Zustand verbessert wird. Die Abschrägungen an den vertikalen Kettengliedern ermöglichen zugleich, daß sich die Gliederkette insgesamt besser am Kettenrad auf die Taschen für die horizontalen Kettenglieder sowie die Zwischenräume für die vertikalen Kettenglieder einstellt, da die Abschrägungen eine Einfädelfunktion für die vertikalen Kettenglieder an den Zahnzwischenräumen übernehmen können. Das Zusammenspiel der erfindungsgemäßen Neuerungen an den horizontalen Kettengliedern, vorzugsweise ergänzt durch die genannten Modifikationen an den vertikalen Kettengliedern verbessert das Laufverhalten und Verschleißverhalten einer erfindungsgemäßen Gliederkette erheblich.

Bei einer insbesondere vorteilhaften Ausgestaltung verläuft die Abschrägung an den horizontalen Kettengliedern relativ zur Abflachung um einen Winkel von etwa 60° ± 2°. Weiter vorteilhaft ist, wenn das Querschnittsprofil der vertikalen Kettenglieder ein Breiten- zu Dickenverhältnis der Breite L zur Dicke D von L/D ≥ 2 aufweist. Das entsprechende Querschnittsprofil ermöglicht äußerst flachbauende vertikale Kettenglieder, die gleichzeitig eine ausreichende Querschnittsfläche besitzen, den im Betrieb der Gliederkette hohen Kräften standhalten zu können. Gleichzeitig können die vertikalen Kettenglieder weiterhin verhältnismäßig einfach und preiswert aus gewalzten Profilstäben mit für den hohen Leistungsbedarf eines Förderers entsprechend stark bemessenen Durchmessern von z.B. 42 mm in der üblichen Schweißausführung hergestellt werden. Bei der erfindungsgemäßen Gliederkette ist die lichte Innenbreite der Innenöffnungen der horizontalen Kettenglieder vorzugsweise deutlich größer als die lichte Innenbreite der vertikalen Kettenglieder.

Bei den erfindungsgemäßen horizontalen Kettengliedern ist es besonders vorteilhaft, wenn die Mitnahmemittel mittig zwischen beiden Bugteilen ausgebildet sind, so daß insgesamt ein symmetrisches horizontales Kettenglied entsteht, welches beim Einbau in eine Gliederkette und im Betrieb keine Vorzugsrichtung aufweist. Bei der insbesondere bevorzugten Ausgestaltung ragt jedes Mitnahmemittel in die zugehörige Einziehung an den Seitenflanken der ansonsten annähernd rechteckigen horizontalen Kettenglieder vorspringend hinein, so daß durch die Mitnahmemittel keine Schwächung der Längsschenkel der horizontalen Kettenglieder und damit keine Schwächung des tragenden Profilquerschnitts der horizontalen Kettenglieder auftreten kann. Die Mitnahmemittel können insbesondere aus einem vorspringenden Steg bestehen, der sich über die gesamte Tiefe der Längsschenkel der horizontalen Kettenglieder erstreckt, so daß dann die Mitnahmemittel im Zusammenwirken mit an diesen befestigten Kratzern eine gleichmäßige und große wirkfläche aufweisen. Im Betriebseinsatz bewirken die Mitnahmemittel, daß die Kratzer schiebend mit der Gliederkette mitbewegt werden, wobei die beidseitige Abstützung der Kratzer durch die beidseitig ausgebildeten Mitnahmemittel ein gleichmäßiges Mitnahmeverhalten der Kratzer erzeugt. Besonders vorteilhaft ist, wenn das Mitnahmemittel eine am Längsschenkel angeformte Mitnahmenase mit vorzugsweise trapezförmigem Querschnitt ist.

Weiter vorzugsweise können die freien Endflächen der Mitnahmemittel einen geringeren Abstand voneinander aufweisen als die Außenbreite der Bugteile beträgt, so daß die Mitnahmemittel solcher horizontalen Kettenglieder, an denen im Betriebseinsatz kein Kratzer angeschlossen ist, in Bewegungsrichtung im geschützten Bereich hinter den äußeren Ecken der geradlinigen Bugteile der horizontalen Kettenglieder liegen. Bei einer besonders vorteilhaften Ausgestaltung der horizontalen Kettenglieder ist der Ursprung der Einziehungen an den Bugteilen von den geraden Stirnzonen der Bugteile beabstandet und/oder zwischen dem Ursprung und der Stirnzone ist ein vorzugsweise geradliniger Zwischenabschnitt ausgebildet. Durch diese Maßnahmen werden die vorderen Eckbereiche der Bugteile gegenüber der bekannten Ausgestaltung der horizontalen Kettenglieder zusätzlich verstärkt und das Risiko übermäßigen Verschleißes an den seitlichen Begrenzungsflächen der Bugteile wird minimiert. Außerdem steigt durch diese Formgebung nochmals die wirksame Auflagefläche der horizontalen Kettenglieder an den Taschen des Kettenrades und die Flächenpressungen werden im Betriebseinsatz weiter reduziert. Weiter vorzugsweise können die Einziehungen zwei geradlinig abgeschrägte Flanken aufweisen, die vorzugsweise einen Winkel von etwa 110° ± 4° einschließen. Die Einziehungen sind damit bei den erfindungsgemäßen horizontalen Kettengliedern deutlich stärker ausgeprägt als bei denen aus dem Stand der Technik, wodurch sich gleichzeitig die zur Verfügung stehende Anlagefläche zwischen den horizontalen Kettengliedern und den an diesen angeschlossenen Kratzern erhöht. Besonders vorteilhaft ist, wenn zwischen den Flanken ein bis auf das vorspringende Mitnahmemittel geradliniger Bodenabschnitt im Bereich der Einziehungen ausgebildet ist.

Die Längsschenkel der horizontalen Kettenglieder weisen vorzugsweise am Übergang der Außenseite zur Ober- und Unterseite der horizontalen Kettenglieder abgerundete Kanten auf. Weiter vorzugsweise können die Bugteile in der Mittelebene der horizontalen Kettenglieder einen kreisrunden Drahtquerschnitt aufweisen, der sich dann zu den Außenflächen der Bugteile hin entsprechend verändert und in seiner Größe zunimmt und anschließend einstückig in die die beiden Bugteile verbindenden Längsschenkel übergeht. Die horizontalen Kettenglieder können insbesondere aus geschmiedeten Kettengliedern bestehen.

Das Einlaufverhalten der erfindungsgemäßen Gliederkette ist besonders vorteilhaft, wenn bei einem Kettenrad die den Zwischenraum begrenzenden Zahnseitenwände am Übergang zur Umfangswandfläche der Zahnelemente ebenfalls mit einer Abschrägung versehen sind. Die Abschrägungen an den Zahnseitenwänden können besonders vorteilhaft mit den Abschrägungen an den vertikalen Kettengliedern zusammenwirken und das Einfädeln der vertikalen Kettenglieder in die Zwischenräume und damit auch der nachfolgenden horizontalen Kettenglieder in die jeweiligen Taschen erheblich verbessern. Es versteht sich, daß bei einem Kettenrad nebeneinander mehrere Zahnkränze, insbesondere drei Zahnkränze vorhanden sein können, von denen ein mittlerer Zahnkranz als Doppelzahnelement ausgebildet wird, um mit dem Kettenrad eine Doppelmittenkette antreiben und bewegen zu können. Auch beim erfindungsgemäßen Kettenrad ist besonders vorteilhaft, wenn die Abschrägungen relativ zur Umfangswandfläche um einen Winkel von etwa 60° ±2° verlaufen. Weiter vorzugsweise kann der Abstand der Zahnseitenwände benachbarter Kränze sich vom Kettenradgrundkörper zur Umfangsfläche bzw. zum Ursprung der Abschrägung an den Zahnelementen vorzugsweise kontinuierlich vergrößern, um das Einlaufverhalten der vertikalen Kettenglieder in die Zahnzwischenräume nochmals zu verbessern.

Weitere Vorteile und Ausgestaltungen der Erfindung ergeben sich auch aus der nachfolgenden Beschreibung eines in der Zeichnung dargestellten, besonders vorteilhaften Ausführungsbeispiels für eine erfindungsgemäße Gliederkette und ein Kettenrad zum Antreiben dieser Gliederkette. In der Zeichnung zeigen:
- **Fig. 1**: einen kurzen Längenabschnitt einer erfindungsgemäßen Gliederkette in Draufsicht, wobei die vertikalen Kettenglieder horizontal geschnitten dargestellt sind;
- **Fig. 2**: die Gliederkette nach Fig. 1 in einer um 90° gedrehten Schnittansicht mit den vertikalen Kettengliedern in Seitenansicht und den horizontalen Kettengliedern in Schnittansicht durch deren Längsmittelebene;
- **Fig. 3**: eine Schnittansicht entlang III-III in Fig. 2;
- **Fig. 4**: ein einzelnes horizontales Kettenglied in Draufsicht;
- **Fig. 5**: das Querschnittsprofil der vertikalen Kettenglieder in vergrößerter Darstellung;
- **Fig. 6**: in Draufsicht, teilweise aufgebrochen, einen an horizontale Kettenglieder einer Doppelmittenkette angeschlossenen Kratzerflügel;
- **Fig. 7**: eine Schnittansicht entlang VII-VII in Fig. 6;
- **Fig. 8**: in Seitenansicht ein Kettenrad mit einem in die Taschen eines Zahnkranzes eingreifenden horizontalen Kettengliedes; und
- **Fig. 9**: schematisch ein horizontales Kettenglied im Zwischenraum zwischen zwei im Schnitt dargestellten Zahnelementen eines erfindungsgemäßen Kettenrades.

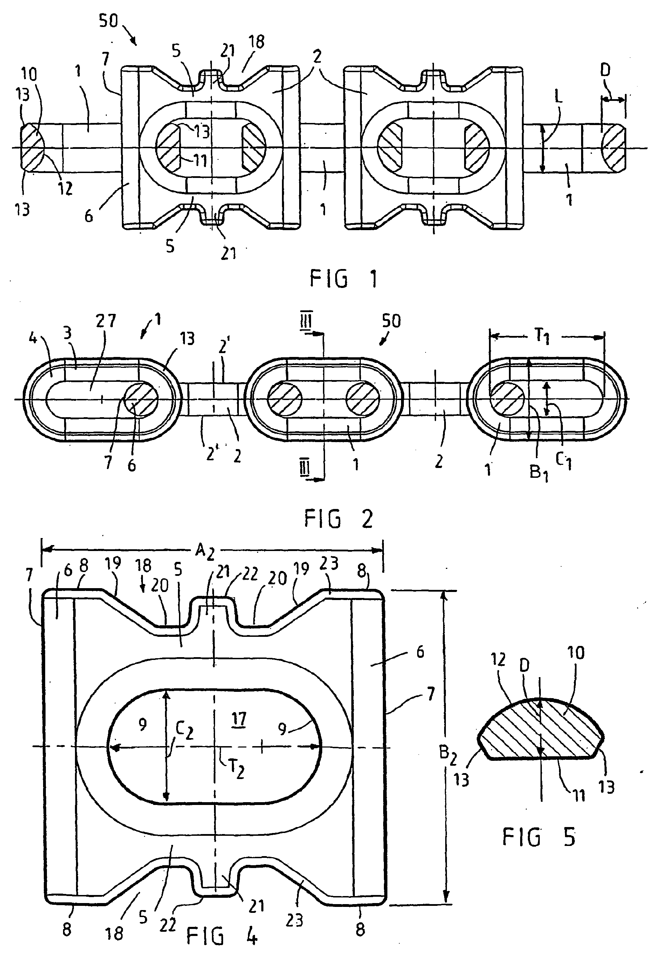

Die in den Fig. 1 bis 3 dargestellte Gliederkette 50 für Kettenförderer, insbesondere für Kettenkratzerförderer als Strebförderer im tertägigen Bergbaueinsatz, besteht im wesentlichen aus gelenkig ineinander gehängten vertikalen Kettengliedern 1 sowie diese gelenkbeweglich miteinander verbindenden horizontalen Kettengliedern 2. Sowohl die im Betriebseinsatz vertikalen bzw. stehenden Kettenglieder 1 als auch die horizontalen bzw. liegenden Kettenglieder 2 sind jeweils als ösenartige Kettenglieder mit Längsschenkeln 3 und Kettenbügen 4 bei den vertikalen Kettengliedern bzw. Längsschenkeln 5 und Bugteilen 6 bei den horizontalen Kettengliedern 2 ausgebildet. Die vertikalen Kettenglieder 1 und die horizontalen Kettenglieder 2 sind in ihrer Formgebung und ihren Abmessungen unterschiedlich ausgebildet und die horizontalen Kettenglieder 2 bestehen aus einteiligen bzw. einstückigen Schmiedestücken, während die vertikalen Kettenglieder 1 aus einem Profildraht mit einem speziellen Profildrahtquerschnitt 10 geformt sind, der in die ösenartige Form der vertikalen Kettenglieder 1 umgeformt und dann, nach Einhängen in die horizontalen Kettenglieder 2, durch Verschweißen der Längsschenkel 3 oder Bugteile 4 zu den geschlossenen ösenartigen vertikalen Kettengliedern 1 verbunden wird.

Die vertikalen Kettenglieder 1 erhalten insbesondere durch ihren besonderen Profilquerschnitt 10 eine insgesamt flache Bauform, wobei der Profilquerschnitt 10 konstant rundumlaufend an den vertikalen Kettengliedern 1 ausgebildet ist. Der Profilquerschnitt 10 der vertikalen Kettenglieder 1 ist in Fig. 5 in vergrößerter Darstellung dargestellt, auf die nun zusätzlich Bezug genommen wird. Der Profilquerschnitt 10 erstreckt sich rundumlaufend über die Bugteile 4 und Längsschenkel 3 der vertikalen Kettenglieder 1 und umfaßt jeweils eine die Außenseite der vertikalen Kettenglieder 1 bildende Abflachung 11 sowie eine jeweils rundumlaufend der ösenartigen Innenöffnung 27 der vertikalen Kettenglieder 1 zugewandte Innenseite, die im Profilquerschnitt einen Teilausschnitt eines Kreisbogens 12 bildet. Die Oberfläche des Kreisbodens 12 hat mithin einen vorzugsweise außerhalb des Profilquerschnitts liegenden erzeugenden Radius, der bei der bevorzugten Kettengröße für die vertikalen Kettenglieder einem Radius von etwa 35 mm entspricht. In Abweichung von einem vollständigen, halbkreisförmigen Querschnittsprofil ist beim erfindungsgemäßen Querschnittsprofil 10 der vertikalen Kettenglieder 1 jeweils am Übergang des Kreisbogens 12 zur Abflachung 11 eine deutlich ausgeprägte Abschrägung 13 vorgesehen, die sich ebenfalls rundumlaufend über die Kettenbüge 4 und die Längsschenkel 3 der vertikalen Kettenglieder 1 erstreckt und die relativ zur Abflachung 11 um einen Winkel von vorzugsweise 60° +2° abgewinkelt verläuft. Bei einem Querschnittsprofil 10 für vertikale Kettenglieder, die hinsichtlich der aufnehmbaren Kräfte demjenigen einer 42mm-Kette entspricht, kann das Verhältnis der Breite L der vertikalen Kettenglieder 1 zu deren Dikke D etwa 62 mm : 30 mm (mithin ≥2) betragen, wobei sich die Abschrägungen 13 über annähernd ein Drittel der Dicke D des Querschnittprofils 10 der vertikalen Kettenglieder 1 erstrecken. Die beidseitig rundumlaufend ausgebildeten Abschrägungen 13 sorgen für eine erhebliche Verbesserung der Beweglichkeit der in die Innenöffnungen 17 der horizontalen Kettenglieder 2 eingehängten vertikalen Kettenglieder 1 und verbessern außerdem das Einfädeln der vertikalen Kettenglieder 1 und damit der erfindungsgemäßen Gliederkette 50 insgesamt in ein Kettenrad zum Antreiben der Gliederkette 50, wie noch erläutert werden wird.

Im Gegensatz zu den vertikalen Kettengliedern 1 mit einem rundumlaufend konstanten Querschnitt bestehen die horizontalen Kettenglieder 2 aus geschmiedeten Kettengliedern mit zwar zueinander gleich ausgebildeten Bugteilen 6 sowie zueinander gleich ausgebildeten Längsschenkeln 5; das umlaufende Querschnittsprofil verändert sich jedoch annähernd ständig. Der Aufbau der horizontalen Kettenglieder 2 wird nun unter Bezugnahme auf die Fig. 1 bis 4 erläutert. Wie insbesondere Fig. 4 gut erkennen läßt, haben die horizontalen Kettenglieder 2 eine quasi rechteckige Grundform mit zwei Bugteilen 6, deren vordere bzw. hintere Stirnseiten 7, wobei sich vordere oder hintere jeweils auf die Laufrichtung einer Gliederkette bezieht, über die gesamte Außenbreite B₂ der Bugteile 6 und damit der horizontalen Kettenglieder 2 geradlinig verläuft. Die Stirnfläche 7 verläuft hierbei zwischen der Unterseite bzw. Oberseite 2' der horizontalen Kettenglieder 2 im wesentlichen kreisbogenförmig und die Bugteile 6 weisen in der Längsmittelebene, wie in der Schnittansicht in Fig. 2 gezeigt, einen kreisrunden Querschnitt auf, der der Ausgangsdrahtstärke der Schmiedekettenglieder von vorzugsweise 42mm entspricht. Die geradlinigen Stirnseiten 7 der Bugteile 6 gehen an den Ecken bzw. Außenseiten um 90° abgewinkelt in an der Außenseite geradlinige Zwischenabschnitte 8 über, die die Seitenbegrenzungen der Bugteile 6 bilden und an die sich jeweils die Längsschenkel 5 des horizontalen Kettengliedes 2 anschließen. Die geradlinigen Abschnitte 8 erstrecken sich jeweils über etwa 19% der Gesamtlänge A₂ der horizontalen Kettenglieder 2 und beide Zwischenabschnitte 8 enden im wesentlichen auf gleicher Höhe wie die halbkreisförmigen Begrenzungsflächen 9 der Innenöffnung 17 der horizontalen Kettenglieder 2. Das Ende des Zwischenabschnitts 8 bildet zugleich den Ursprung einer Einziehung 18 an der Außenseite beider Längsschenkel 5, die mittels jeweils zweier geradlinig abgeschrägter Flanken 19 sowie eines wiederum geradlinigen und senkrecht zur Stirnseite 7 verlaufenden Bodenabschnitts 20 gebildet sind. Die Boäenabschnitte 20 gehen allerdings jeweils in die Seitenflanken einer in die Einziehung 18 vorspringend hineinragenden, mittig der Längsschenkel 5 ausgebildeten Mitnahmenase 21 über. Die Mitnahmenase 21 hat in Draufsicht einen annähernd trapezförmigen Querschnitt und liegt mittig zwischen beiden geradlinigen Stirnseiten 7 des horizontalen Kettengliedes 2. Die Mitnahmenase 21 erstreckt sich im wesentlichen stegförmig von der Ober- zur Unterseite der horizontalen Kettenglieder 2 und die freien Endflächen 22 der Mitnahmenase 21 haben einen geringfügig geringeren Abstand als die Außenbreite B₂ der horizontalen Kettenglieder 2 an den Bugteilen 6. Der Abstand zwischen den freien Stirnflächen 22 ist bei der bevorzugten Ausgestaltung eines horizontalen Kettengliedes 2 etwa 5% kleiner als die maximale Außenbreite B₂. Die Länge der Einziehung 18 entspricht etwa der Teilung T₂ der Kettenglieder 2, die bei der bevorzugten Ausgestaltung 140mm beträgt und die Mitnahmenase 21 erstreckt sich über eine Breite, die etwa 21% der Länge der Einziehung 18 ausmacht. Der Krümmungsradius der kreisbogenförmigen Begrenzungen 9 der Innenöffnung 17 entspricht dem Krümmungsradius der Innenseite 13 der vertikalen Kettenglieder 1 und die lichte Innenbreite C₂ der Innenöffnung 17 der horizontalen Kettenglieder 2 ist vorzugsweise etwa 18% größer als die Breite L des Querschnittsprofils 10 der vertikalen Kettenglieder 1. Die beiden Flanken 19 der Einziehungen 18 schließen vorzugsweise einen Winkel von etwa 110° ein und sind entsprechend um etwa 35° zu den Zwischenabschnitten 8 abgewickelt. Die Bodenabschnitte 20 an den gegenüberliegenden Längsschenkeln 5 können jeweils einen Abstand voneinander haben, der etwa 24% geringer ist als die maximale Außenbreite B₂ der Bugteile 6. Beide Längsschenkel 5 sowie die Zwischenabschnitte 8 gehen über eine geringfügig abgerundete Kante 23 jeweils in die Ober- und Unterseiten der horizontalen Kettenglieder 2 über.

Bei den vertikalen Kettengliedern 1 entspricht die Teilung T₁ der Teilung T₂ der horizontalen Kettenglieder 2, allerdings ist sowohl die Außenbreite B₁ als auch die lichte Innenweite C₁ deutlich niedriger als bei den vertikalen Kettengliedern. Das Verhältnis C₂/C₁ beträgt vorzugsweise 76 mm/48 mm, mithin etwa 1,6 und das Verhältnis B₂/B₁ beträgt vorzugsweise 210 mm/108 mm, mithin etwa 1,95.

Wie insbesondere Fig. 1 erkennen läßt, sorgen die Abschrägungen 13 am Übergang zu den Abflachungen an der Außenseite der vertikalen Kettenglieder 1 für eine gute Gelenkbeweglichkeit der vertikalen Kettenglieder 1 in den Innenöffnungen 17 der horizontalen Kettenglieder 2, so daß dort ein verbessertes Gelenkspiel und damit eine geringere Verschleißanfälligkeit besteht.

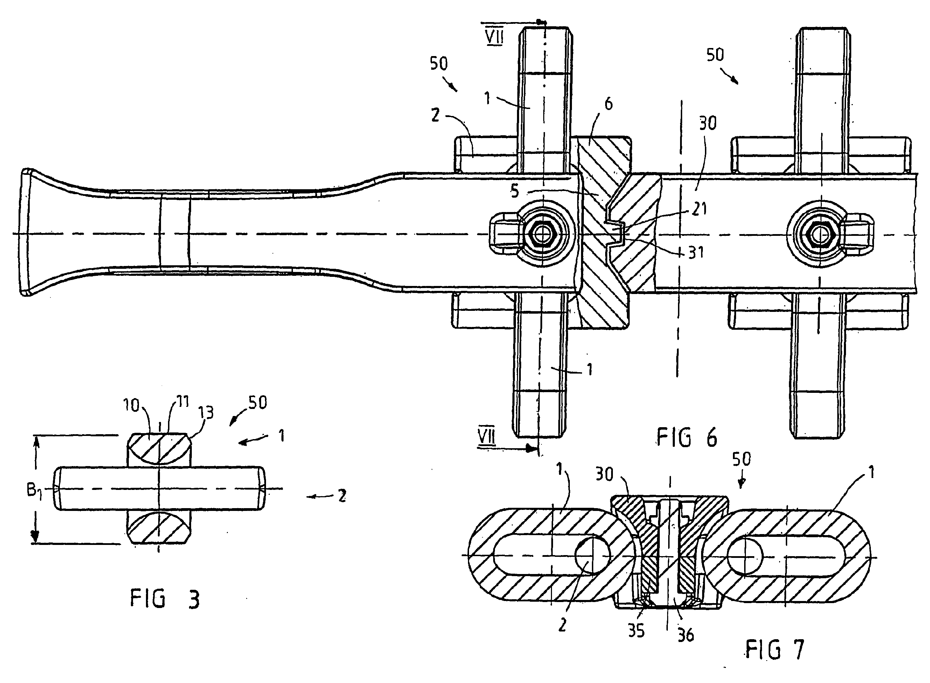

Die Fig. 6 und 7 zeigen einen Ausschnitt der Gliederkette 50 mit vertikalen Kettengliedern 1 und einem horizontalen Kettenglied 2, an dem ein sich über die gesamte Breite einer Förderrinne erstreckender Kratzer 30 angeschlossen ist. Für den Transport der Kratzer 30 sind zwei identisch aufgebaute Gliederketten 50 vorgesehen, die mithin eine Doppelmittenkette bilden. Aus dem Aufbruch in Fig. 6 ist gut ersichtlich, wie die Mitnahmenase 21 an den Längsschenkeln 5 der horizontalen Kettenglieder 2 in eine zugehörige Nut 31 im Kratzer 30 formschlüssig eingreift, um die Kratzer 30 schiebend in Förderrichtung bzw. Laufrichtung der Gliederketten 50 mitzunehmen. Die horizontalen Kettenglieder 2 werden hierzu in nicht dargestellte Ausnehmungen von der Unterseite der Kratzer 30 derart eingesetzt, daß die Mitnahmenasen 21 beidseitig in entsprechende Nuten 31 einfassen. Anschließend wird von unten ein Kratzersicherungsglied 35 eingesetzt, das mittels einer Schraube 36 mit dem flügelartigen Kratzer 30 lösbar verschraubt wird, um die Kratzer 30 montieren bzw. demontieren zu können.

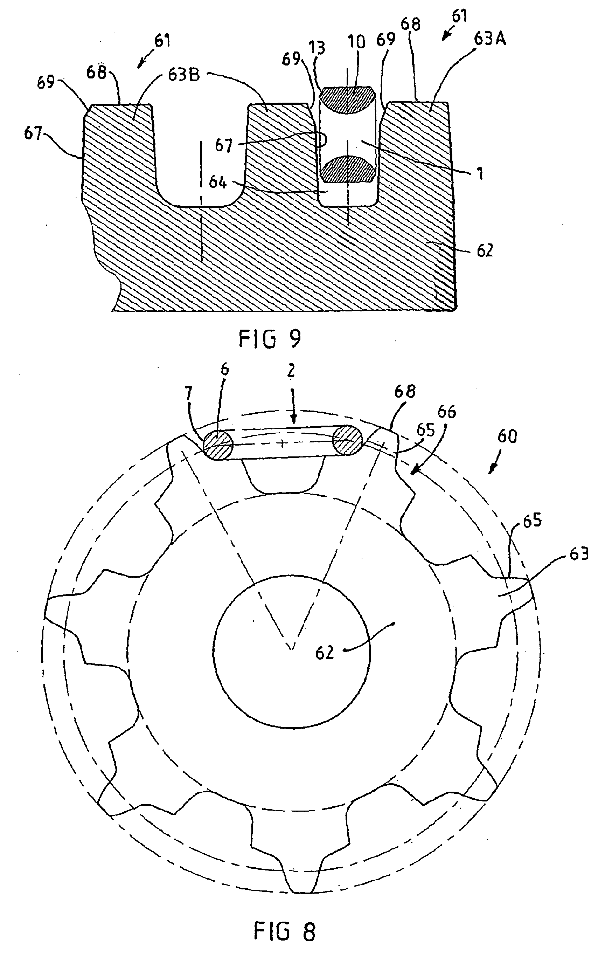

Die Fig. 8 und 9 zeigen ein für eine erfindungsgemäße Gliederkette 50 bevorzugt verwendbares Kettenrad 60, das bei einer Ausgestaltung für eine Doppelmittenkette mit vier nebeneinanderliegenden Kränzen 61 von insgesamt sieben gleichmäßig über den Umfang des Kettenradgrundkörpers 62 verteilt angeordneten Zahnelementen 63 versehen ist. Wie insbesondere Fig. 9 zeigt, umfassen zwei nebeneinanderliegende Zahnkränze 61 jeweils um einen Zwischenraum 64 beabstandet ein Zahnelement 63A oder ein Zahnelemente 63B, wobei nur für die beiden rechten Zahnkränze 61 beide Zahnelemente 63A, 63B dargestellt sind. Mit den einander zugewandten Flanken 65 der Zahnelemente 63A, 63B werden Taschen 66 gebildet, an denen sich die horizontalen Kettenglieder 2, wie schematisch in Fig. 8 dargestellt, sowohl in Umfangsrichtung als auch in Radialrichtung anlegen, um eine Gliederkette durch schiebende Mitnahme der am Kettenrand 60 umgelenkten horizontalen Kettenglieder 2 anzutreiben. Schon aus der Seitenansicht in Fig. 8 ist gut ersichtlich, daß aufgrund der gradlinigen Ausgestaltung der Stirnseiten 7 der Bugteile 6 der horizontalen Kettenglieder 2 eine großflächige Auflage der horizontalen Kettenglieder 2 insbesondere in Radialrichtung an den Taschen 66 der Zahnelemente 63 erreicht wird, die selbst bei Verschleißerscheinungen an den Taschen deutlich höher ist als bei horizontalen Kettengliedern 2 mit einer runden Bugstirnseite.

Die einander zugewandten Zahnseitenwände 67 der Zahnelemente 63A, 63B, mit denen die Zwischenräume 64 seitlich begrenzt werden, weisen am Übergang zur Umfangswandfläche 68 der Zahnelemente 63A, 63B wiederum eine Abschrägung 69 auf, die relativ zur Umfangswandfläche 68 vorzugsweise um einen Winkel von 60° ±2° geneigt verläuft. Durch das Zusammenspiel der Abschrägungen 69 an den Zahnelementen 63A, 63B mit den Abschrägungen 13 an den vertikalen Kettengliedern 1 wird eine besonders gute Führung und damit ein besonders verschleißfreies Einfädeln der vertikalen Kettenglieder 1 und damit der gesamten Gliederkette in das Kettenrad 60 bewirkt. Der Abstand der einander gegenüberliegenden Zahnseitenwände 67 vergrößert sich vom Kettenradgrundkörper 62 zu den Umfangswandflächen 68 vorzugsweise kontinuierlich um einen Winkel von insbesondere 6°.

Für den Fachmann ergeben sich aus der vorhergehenden Beschreibung zahlreiche Modifikationen, die in den Schutzbereich der anhängenden Ansprüche fallen sollen. Die angegebenen Maße stellen nur die bevorzugten Abmessungen für die vertikalen und horizontalen Kettenglieder dar. Die Abmessungen der Mitnahmenasen in den Einziehungen können auch abweichen, ohne den Schutzbereich der Ansprüche zu verlassen.

## Patentansprüche

1. Gliederkette für Kettenförderer, insbesondere Kettenkratzerförderer für den Bergbaueinsatz, mit gelenkig ineinander gehängten vertikalen Kettengliedern (1) und horizontalen Kettengliedern (2), wobei die vertikalen Kettenglieder rundumlaufend ein konstantes, an der Außenseite mit einer Abflachung (11) und an der Innenseite mit einem Kreisbogen (12) versehenes Querschnittsprofil (10) aufweisen und die horizontalen Kettenglieder (2) Bugteile (6) aufweisen, deren Außenbreite (B₂) größer ist als die Außenbreite (B₁) der vertikalen Kettenglieder und die eine gerade Stirnzone (7) aufweisen, wobei die die Bugteile (6) verbindenden Längsschenkel (5) der horizontalen Kettenglieder (2) an ihren Außenflächen mit einer Einziehung (18) versehen sind, **dadurch gekennzeichnet, daß** die horizontalen Kettenglieder (2) beidseitig in den Einziehungen (18) Mitnahmemittel (21) zur formschlüssigen Mitnahme von an den horizontalen Kettengliedern (2) anschließbaren Kratzern aufweisen.

2. Gliederkette nach Anspruch 1, **dadurch gekennzeichnet, daß** das Querschnittsprofil (10) der vertikalen Kettenglieder (1) jeweils am Übergang der Abflachung (11) in den Kreisbogen (12) mit einer Abschrägung (13) versehen ist, die vorzugsweise relativ zur Abflachung (11) um einen Winkel von 60° ±2° geneigt verläuft.

3. Gliederkette nach Anspruch 1 oder 2, **dadurch gekennzeichnet, daß** das Querschnittsprofil (10) der vertikalen Kettenglieder (1) ein Breiten- zu Dickenverhältnis L/D ≥ 2 aufweist.

4. Gliederkette nach einem der Ansprüche 1 bis 3, **dadurch gekennzeichnet, daß** die Mitnahmemittel (21) mittig zwischen beiden Bugteilen (6) ausgebildet sind.

5. Gliederkette nach einem der Ansprüche 1 bis 4, **dadurch gekennzeichnet, daß** jedes Mitnahmemittel (21) in die zugehörige Einziehung (18) vorspringend hineinragt.

6. Gliederkette nach Anspruch 5, **dadurch gekennzeichnet, daß** die Mitnahmemittel (21) aus einem vorspringenden Steg bestehen, der sich über die gesamte Tiefe der Längsschenkel (5) der horizontalen Kettenglieder (2) erstreckt.

7. Gliederkette nach Anspruch 5 oder 6, **dadurch gekennzeichnet, daß** das Mitnahmemittel eine am Längsschenkel (5) angeformte Mitnahmenase (21) mit vorzugsweise trapezförmigem Querschnitt ist.

8. Gliederkette nach einem der Ansprüche 5 bis 7, **dadurch gekennzeichnet, daß** die freien Endflächen (22) der Mitnahmemittel (21) einen geringeren Abstand voneinander aufweisen als die Außenbreite (B₂) der Bugteile (6).

9. Gliederkette nach einem der Ansprüche 1 bis 8, **dadurch gekennzeichnet, daß** der Ursprung der Einziehungen (18) an den Bugteilen (6) von den geraden Stirnzonen (7) beabstandet ist und/oder zwischen dem Ursprung und der Stirnzone (7) ein gradliniger Zwischenabschnitt (8) ausgebildet ist.

10. Gliederkette nach Anspruch 9, **dadurch gekennzeichnet, daß** die Einziehungen (18) zwei gradlinig abgeschrägte Flanken (19) aufweisen, die vorzugsweise einen Winkel von 110° ±4° einschließen.

11. Gliederkette nach Anspruch 10, **dadurch gekennzeichnet, daß** zwischen den Flanken (19) ein bis auf das vorspringende Mitnahmemittel (21) geradliniger Bodenabschnitt (20) ausgebildet ist.

12. Gliederkette nach einem der Ansprüche 1 bis 11, **dadurch gekennzeichnet, daß** die Längsschenkel (5) der horizontalen Kettenglieder (2) am Übergang der Außenseite zur Ober- und Unterseite (2') abgerundete Kanten (23) aufweisen.

13. Gliederkette nach einem der Ansprüche 1 bis 12, **dadurch gekennzeichnet, daß** die Bugteile (6) in der Mittelebene der horizontalen Kettenglieder (2) einen kreisrunden Drahtquerschnitt aufweisen.

## Claims

1. Link chain for chain conveyors, in particular scraper chain conveyors for use in mining, with vertical chain links (1) which are interlinked in an articulated manner and horizontal chain links (2), wherein the vertical chain links have around the full circumference a constant cross-sectional profile (10) provided on the outside with a flat section (11) and on the inside with a circular arc (12) and the horizontal chain links (2) have front sections (6) whose outer width (B₂) is larger than the outer width (B₁) of the vertical chain links and which have a straight front zone (7), wherein the longitudinal limbs (5), which connect the front sections (6), of the horizontal chain links (2) are provided on their outer faces with a recess (18), **characterized in that** the horizontal chain links (2) have, on both sides in the recesses (18), entrainment means (21) for positive-locking entrainment of scrapers which are connectable to the horizontal chain links (2).

2. Link chain according to claim 1, **characterized in that** the cross-sectional profile (10) of the vertical chain links (1) is in each case provided with a bevel (13) at the transition of the flat section (11) into the circular arc (12), which preferably runs relative to the flat section (11) at an angle of 60° ± 2°.

3. Link chain according to claim 1 or 2,
**characterized in that** the cross-sectional profile (10) of the vertical chain links (1) has a width to thickness ratio L/D

4. Link chain according to one of claims 1 to 3,
**characterized in that** the entrainment means (21) are formed centrally between both front sections (6).

5. Link chain according to one of claims 1 to 4,
**characterized in that** each entrainment means (21) protrudes into the associated recess (18) in a projecting manner.

6. Link chain according to claim 5, **characterized in that** the entrainment means (21) comprises a projecting web which extends over the entire depth of the longitudinal limbs (5) of the horizontal chain links (2).

7. Link chain according to claim 5 or 6,
**characterized in that** the entrainment means is an entrainment nose (21) formed on the longitudinal limb (5) with a preferably trapezoidal cross-section.

8. Link chain according to one of claims 5 to 7, **characterized in that** the free end faces (22) of the entrainment means (21) have a shorter distance from one another than the outer width (B₂) of the front sections (6).

9. Link chain according to one of claims 1 to 8,
**characterized in that** the origin of the recesses (18) on the front sections (6) is spaced apart from the straight front zones (7) and/or a straight intermediate portion (8) is formed between the origin and the front zone (7).

10. Link chain according to claim 9, **characterized in that** the recesses (18) have two flanks (19) beveled in a straight line which preferably enclose an angle of 110° ± 4°.

11. Link chain according to claim 10, **characterized in that** a base section (20) which is straight up to the projecting entrainment means (21) is formed between the flanks (19).

12. Link chain according to one of claims 1 to 11, **characterized in that** the longitudinal limbs (5) of the horizontal chain links (2) have rounded edges (23) at the transition of the outside to the upper and lower side (2').

13. Link chain according to one of claims 1 to 12, **characterized in that** the front sections (6) have a circular wire cross-section in the central plane of the horizontal chain links (2).

## Revendications

1. Maillon de chaîne pour des transporteurs à chaînes, en particulier des transporteurs à chaînes à raclettes pour l'utilisation dans l'exploitation des mines, comprenant des maillons verticaux de chaîne (1) et des maillons horizontaux de chaîne (2) accrochés l'un dans l'autre de manière articulée, dans lequel les maillons verticaux de chaîne présentent sur toute leur périphérie un profilé de section transversale constant (10) muni d'un méplat (11) sur le côté extérieur et d'un arc de cercle (12) sur le côté intérieur et dans lequel les maillons horizontaux de chaîne (2) présentent des parties de tronçons arrondis (6) dont la largeur extérieure (B₂) est supérieure à la largeur extérieure (B₁) des maillons verticaux de chaîne et qui présentent une zone frontale droite (7), dans lequel les flancs longitudinaux (5) des maillons horizontaux de chaîne (2), lesquels relient les parties de tronçons arrondis (6), sont munis sur leurs surfaces extérieures d'une partie en retrait (18), **caractérisé en ce que** les maillons horizontaux de chaîne (2) présentent des deux côtés des moyens d'entraînement (21) dans les parties en retrait (18) pour l'entraînement par coopération de formes de raclettes qui peuvent être reliées aux maillons horizontaux de chaîne (2).

2. Maillon de chaîne selon la revendication 1, **caractérisé en ce que** le profilé de section transversale (10) des maillons verticaux de chaîne (1) est muni respectivement, au niveau de la transition du méplat (11) dans l'arc de cercle (12), d'un biseautage (13) qui s'étend de préférence sous une inclinaison d'un angle de 60° ± 2° par rapport au méplat (11).

3. Maillon de chaîne selon l'une ou l'autre des revendications 1 et 2, **caractérisé en ce que** le profilé de section transversale (10) des maillons verticaux de chaîne (1) présente un rapport entre la largeur et l'épaisseur L/D ≥ 2.

4. Maillon de chaîne selon l'une des revendications 1 à 3, **caractérisé en ce que** les moyens d'entraînement (21) sont réalisés au milieu entre les deux parties de tronçons arrondis (6).

5. Maillon de chaîne selon l'une des revendications 1 à 4, **caractérisé en ce que** chaque moyen d'entraînement (21) vient dépasser jusque dans la partie en retrait correspondante (18) en faisant saillie.

6. Maillon de chaîne selon la revendication 5, **caractérisé en ce que** les moyens d'entraînement (21) sont constitués d'un tenon en saillie qui s'étend sur toute la profondeur des flancs longitudinaux (5) des maillons horizontaux de chaîne (2).

7. Maillon de chaîne selon l'une ou l'autre des revendications 5 et 6, **caractérisé en ce que** le moyen d'entraînement est un tenon d'entraînement (21) conformé sur le flanc longitudinal (5) et comportant de préférence une section transversale en forme de trapèze.

8. Maillon de chaîne selon l'une des revendications 5 à 7, **caractérisé en ce que** les surfaces terminales libres (22) des moyens d'entraînement (21) présentent une plus faible distance l'une de l'autre que la largeur extérieure (B₂) des parties de tronçons arrondis (6).

9. Maillon de chaîne selon l'une des revendications 1 à 8, **caractérisé en ce que** l'origine des parties en retrait (18) est agencée à distance des zones frontales droites (7) sur les parties de tronçons arrondis (6) et/ou **en ce qu'**un tronçon intermédiaire en ligne droite (8) est réalisé entre l'origine et la zone frontale (7).

10. Maillon de chaîne selon la revendication 9, **caractérisé en ce que** les parties en retrait (18) présentent deux flancs biseautés en ligne droite (19) qui incluent de préférence un angle de 110° ± 4°.

11. Maillon de chaîne selon la revendication 10, **caractérisé en ce qu'**un tronçon de fond en ligne droite (20) est réalisé entre les flancs (19) jusqu'au moyen d'entraînement faisant saillie (21).

12. Maillon de chaîne selon l'une des revendications 1 à 11, **caractérisé en ce que** les flancs longitudinaux (5) des maillons horizontaux de chaîne (2) présentent des arêtes arrondies (23) au niveau de la transition du côté extérieur vers la face supérieure et la face inférieure (2').

13. Maillon de chaîne selon l'une des revendications 1 à 12, **caractérisé en ce que** les parties de tronçons arrondis (6) présentent une section transversale circulaire de fil métallique dans le plan médian des maillons horizontaux de chaîne (2).
